(19) Europäisches Patentamt
European Patent Office
Office européen des brevets

(11) **EP 0 868 052 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(51) Int Cl.:
**H04L 12/56** *(2006.01)*      **H04Q 11/04** *(2006.01)*

(21) Anmeldenummer: **98103828.4**

(22) Anmeldetag: **04.03.1998**

(54) **Redundantes Übertragungssystem mit Vermeidung von Zellwiederholungen**

Redundant transmission system with avoidance of cell repetitions

Système redondant de transmission avec la prévention de répétition de cellules

(84) Benannte Vertragsstaaten:
**AT CH DE ES FR GB LI**

(30) Priorität: **27.03.1997 DE 19713051**

(43) Veröffentlichungstag der Anmeldung:
**30.09.1998 Patentblatt 1998/40**

(73) Patentinhaber: **Nokia Siemens Networks GmbH & Co. KG**
**81541 München (DE)**

(72) Erfinder: **Rau, Peter, Dr.**
**81241 München (DE)**

(56) Entgegenhaltungen:
**EP-A- 0 453 606**          **GB-A- 2 236 930**
**US-A- 5 450 397**

**Beschreibung**

Der Anmeldungsgegenstand betrifft ein Verfahren nach dem Oberbegriff des Anspruchs 1. Ein derartiges Verfahren ist aus der EP-0384936, EP-0453606 oder EP-0453607 bekannt.

Bei der ATM (Asynchronous Transfer Mode)-Übertragung ist die Reihenfolge der Nachrichtenzellen, die einer virtuellen Verbindung zugehören, einzuhalten. Zur Bezeichnung der Reihenfolge führen die Nachrichtenzellen eine zyklisch fortlaufend vergebene Folgenummer in einem Feld für die Folgenummer mit sich. Die voneinander unterscheidbaren Folgenummern einer virtuellen Verbindung legen einen Nachrichtenzellen-Folgezyklus fest. Zur Einhaltung einer vorgegebenen Verlustwahrscheinlichkeit kann eine parallele Weiterleitung, Durchschaltung über redundante Übertragungswege erforderlich sein. In der Empfangseinrichtung wird unter den redundant übertragenen Nachrichtenzellen nur eine in der Reihenfolge als nächste erwartete Nachrichtenzelle ausgewählt. Aus der EP-0384936, EP-0453606 oder EP-0453607 sind Algorithmen bekannt, bei denen jede Nachrichtenzelle, die die auf die augenblicklich als letzte zur Weiterbehandlung angenommene Nachrichtenzelle nächstfolgende Nachrichtenzelle ist und jede Nachrichtenzelle, die auf demselben Übertragungsweg (aktiver Übertragungsweg) wie die augenblicklich als letzte zur Weiterbehandlung angenommene Nachrichtenzelle ankommt, zur Weiterbehandlung angenommen wird. Dabei ist nur für Nachrichtenzellen, die die auf die augenblicklich als letzte zur Weiterbehandlung angenommene Nachrichtenzelle nächstfolgende Nachrichtenzelle sind, die Reihenfolge der Nachrichtenzellen sichergestellt. Auf dem aktiven Übertragungsweg fehlende Nachrichtenzellen, die nicht durch rechtzeitig auf dem nicht - aktiven Übertragungsweg eintreffende Nachrichtenzellen ersetzt werden können, werden dabei übersprungen. Bei den bekannten Algorithmen kann es zu einer Weiterleitung eines in der Reihenfolge verwürfelten Stroms von Nachrichtenzellen, der von dem aktiven Übertragungsweg übertragen wurde, kommen. Weiter konnte bei einer Umschaltung auf einen anderen Übertragungsweg eine Wiederholung von Nachrichtenzellen bis zur Anzahl eines Nachrichtenzellen-Folgezyklus' auftreten. Eine durch eine Umschaltung bedingte Wiederholung von Nachrichtenzellen konnte zwar durch zeitweilige Sperre des Stroms von Nachrichtenzellen weitgehend ausgeschlossen werden, was jedoch mit einem entsprechend hohen Verlust von Nachrichtenzellen einhergeht.

Dem Anmeldungsgegenstand liegt das Problem zugrunde, für ein Übertragungssystem, in dem redundante Nachrichtenzellen über redundante Übertragungswege übertragen werden, ein Verfahren anzugeben, bei dem Wiederholungen von Nachrichtenzellen, das Auftreten von Fehlern in der Reihenfolge von Nachrichtenzellen und der Verlust von Nachrichtenzellen bei Umschaltung erheblich verringert sind.

Das Problem wird durch die Merkmale des kennzeichnenden Teils des Anspruchs 1 gelöst.

Das anmeldungsgemäße Verfahren legt ein Sperrfenster fest, wobei Nachrichtenzellen, insbesondere überholte Nachrichtenzellen, deren Folgenummern in das Sperrfenster fallen, nicht zur Weiterbehandlung angenommen werden. Das anmeldungsgemäße Verfahren schränkt die möglichen Sprünge bei der Auswahl von Folgenummern auf einen Bereich ein, innerhalb dessen das Auftreten von Nachrichtenzellen mit zulässiger Folgenummer erwartet wird. Das anmeldungsgemäße Verfahren bringt im Falle einer Umschaltung auf einen bislang nicht aktiven Übertragungsweg eine Vermeidung einer Wiederholung von Nachrichtenzellen bei gleichzeitig geringst möglichen Verlusten von Nachrichtenzellen mit sich. Eine zu großen Verlusten von Nachrichtenzellen führende zeitweilige Sperre ist bei der Umschaltung vermieden.

Eine besondere Weiterbildung des Anmeldungsgegenstandes ist dadurch gegeben, daß der Wert des festen Betrags (n) im Wesentlichen der Hälfte der Anzahl der von einem Nachrichtenzellen-Folgezyklus umfaßten Nachrichtenzellen gleicht. Diese Maßnahme bringt ein günstiges Verhältnis von zur Weiterbehandlung angenommenen Nachrichtenzellen zu der Sperrung von wiederholten Nachrichtenzellen mit sich.

Der Anmeldungsgegenstand wird im Folgenden als Ausführungsbeispiel in einem zum Verständnis erforderlichen Umfang anhand von Figuren näher beschrieben. Dabei zeigen:

Figur 1    eine schematische Darstellung einer Vermittlungseinrichtung, die nach einem asynchronen Übertragungsverfahren weitergeleitete Nachrichtenzellen über redundante Übertragungswege durchschaltet

Figur 2    eine prinzipielle Darstellung einer Nachrichtenzelle

Figur 3    eine graphische Darstellung eines Sperrfensters.

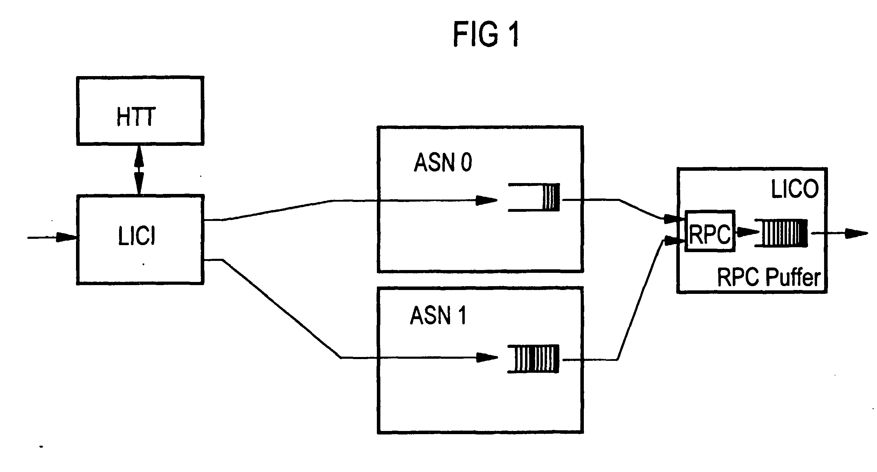

Die in Figur 1 dargestellte Vermittlungseinrichtung weist eingangsseitig eine Eingangseinrichtung LICI (für: Line Interface Circuit Input) auf, der im Zuge von virtuellen Verbindungen nach einem asynchronen Übertragungsverfahren, insbesondere dem ATM (Asynchronous Transfer Mode) -Verfahren übertragene Nachrichtenzellen zugeführt sind. Es können beispielsweise 8192 virtuelle Verbindungen gegeben sein.

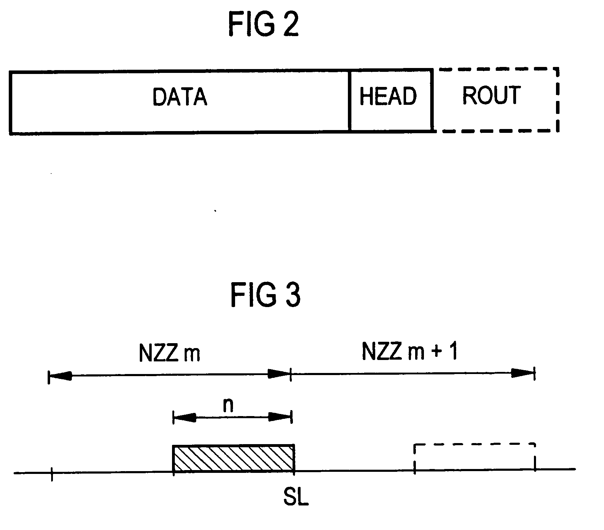

Eine in Figur 2 dargestellte Nachrichtenzelle weist eine feste Länge auf und ist mit einem Nutzdatenteil DATA und einem diesem vorangestellten Nachrichtenzellenkopf HEAD gebildet. Der Nutzdatenteil möge 48 Byte und der Nachrichtenzellenkopf möge 5 Byte Länge aufweisen. Der Nachrichtenzellenkopf weist eine Zielinformation VPI (Virtuel Path Identifier) /VCI (Virtuel Channel Identifier) auf, die die Nachrichtenzelle als einer virtuellen Verbindung zugehörig und die den Empfänger angibt. Bei Ankunft einer Nachrichtenzelle in der Eingangseinrichtung wird die Zielinformation der Nachrichtenzelle einer Umwerteeinrichtung HTT (für: Header Translation Table) zugeführt, die nach Maßgabe der Zielinformation ein Beifügen einer Durchschalteinformation ROUT (für: Routing) zu der Nachrichtenzelle bewirkt. Die Durchschalteinformation gibt den Ausgang der Vermittlungseinrichtung an, zu dem die Nachrichtenzelle über eine Koppelfeldscheibe ASN (für: Asynchronous Switching Network) durchgeschaltet werden soll. Zur Einhaltung einer vorgegebenen Verlustwahrscheinlichkeit von beispielsweise $10^{-9}$ kann eine parallele Durchschaltung über redundante Koppelfeldscheiben erforderlich sein. Die Vermittlungseinrichtung weist zwei zueinander redundante Koppelfeldscheiben ASN0, ASN1 auf, die redundante Übertragungswege bilden. In der Eingangseinrichtung erfolgt eine Vermehrfachung der Nachrichtenzellen entsprechend der Anzahl der Koppelfeldscheiben, im Ausführungsbeispiel eine Verdoppelung, zu einer Gruppe von Nachrichtenzellen gleichen Inhalts. Eine Nachrichtenzelle weist eine Folgenummer auf, die für aufeinanderfolgende, einer virtuellen Verbindung zugehörigen Nachrichtenzellen zyklisch fortlaufend zugeteilt ist. Die Folgenummern mögen den Nachrichtenzellen in aufsteigender Zählrichtung zugeordnet werden. Die voneinander unterscheidbaren Folgenummern SNmax (für: Sequenz Number maximum) einer virtuellen Verbindung legen einen Nachrichtenzellen-Folgezyklus NZZ fest. Die Nachrichtenzellen einer Gruppe weisen dieselbe Folgenummer auf. Über die redundanten Koppelfeldscheiben wird jeweils eine Nachrichtenzelle aus einer Gruppe von Nachrichtenzellen zu dem betreffenden Ausgang durchgeschaltet.

Die redundanten Koppeleinrichtungen weisen an ihren Ausgängen große Speicher zur Pufferung von Nachrichtenzellen auf. Zwischen zueinander redundanten Nachrichtenzellen, die der Auswahleinrichtung von den Koppeleinrichtungen zugeführt sind, kann es zu einer Phasenverschiebung kommen. Zur Vermeidung von Reihenfolgefehlern zwischen derselben virtuellen Verbindung zugehörigen Nachrichtenzellen ist die Dauer eines Nachrichtenzellen-Folgezyklus' größer als die maximal zu erwartende Laufzeitdifferenz zwischen den Übertragungswegen.

Die von den redundanten Koppelfeldscheiben abgegebenen Nachrichtenzellen werden von einer Ausgangseinrichtung LICO (für: Line Interface Circuit Output) empfangen. In der Ausgangseinrichtung werden die empfangenen Nachrichtenzellen auf Fehlerhaftigkeit überprüft. Dies kann durch Überprüfung von Paritätsbits gegeben sein. Als fehlerhaft festgestellte Nachrichtenzellen werden verworfen. Die Ausgangseinrichtung weist eine Auswahleinrichtung RPC (für: Redundant Path Combination) auf, die aus einer Gruppe von als fehlerfrei empfangenen Nachrichtenzellen nur eine Nachrichtenzelle auswählt und weiterbehandelt. Die Weiterbehandlung mag durch eine Weiterleitung über einen RPC Puffer und eine Leitung zu einer entfernt angeordneten Einrichtung gegeben sein.

Bei der Weiterleitung von Nachrichtenzellen nach dem ATM-Übertragungsverfahren ist für eine virtuelle Verbindung die Reihenfolge der Nachrichtenzellen einzuhalten.

Die Auswahleinrichtung weist eine Speichereinrichtung mit wahlfreiem Zugriff RAM (für: random access memory) auf, die für jede virtuelle Verbindung VC1, VC2, ..,VCn eine Speicherzeile aufweist. In der Speicherzeile ist ein Platz zur Abspeicherung der Folgenummer SL der für die betreffende virtuelle Verbindung zuletzt weitergeleiteten Nachrichtenzelle reserviert. Weiter ist in der Speicherzeile für jede Verbindung ein Speicherplatz reserviert, der den Übertragungsweg bezeichnet, über den die augenblicklich als letzte zur Weiterleitung ausgewählte Nachrichtenzelle der betreffenden Verbindung übertragen wurde. Der Inhalt des Speicherplatzes gibt also den augenblicklich aktiven Übertragungsweg an.

In der Auswahleinrichtung wird überprüft, ob eine ankommende Nachrichtenzelle diejenige ist, die für die betreffende virtuelle Verbindung die auf die zuletzt weitergeleitete Nachrichtenzelle nächstfolgend weiterzuleitende ist. Dazu wertet ein Rekombinations - Algorithmus die in der Speicherzeile für die betreffende virtuelle Verbindung abgespeicherte Folgenummer und den Inhalt des Speicherplatzes aus. Die Ermittlung der nächstfolgenden Nachrichtenzelle kann vorteilhafterweise dadurch erfolgen, daß die abgespeicherte Folgenummer der zuletzt weitergeleiteten Nachrichtenzelle inkrementiert wird und die Folgenummer einer gerade durchgeschalteten Nachrichtenzelle mit der inkrementierten Folgenummer verglichen wird. Dabei beschränkt sich die Ermittlung der nächstfolgenden Nachrichtenzelle auf einen in einfacher Weise durchzuführenden Vergleich der Folgenummern.

Im Allgemeinen wird die als erste in der Ausgangseinrichtung ankommende Nachrichtenzelle einer Gruppe von Nachrichtenzellen weitergeleitet. Eine Nachrichtenzelle, die später in der Auswahleinrichtung ankommt als eine zur selben Gruppe gehörige Nachrichtenzelle, die zuvor zur Weiterleitung ausgewählt ist, wird verworfen. Besondere Rekombinations - Algorithmen zur Bestimmung der für eine virtuelle Verbindung jeweils nächsten weiterzuleitenden Nachrichtenzelle sind beispielsweise aus der EP-0384936, EP-0453606 oder EP-0453607 bekannt.

Fig 3 zeigt zwei aufeinanderfolgende Nachrichtenzellen-Folgezyklen NZZm und NZZm+1. Die Folgenummer SL der augenblicklich als letzte zur Weiterbehandlung ausgewählten Nachrichtenzelle möge gerade die Grenze zwischen den Nachrichtenzellen-Folgezyklen bilden. Die Folgenummer SL der augenblicklich als letzte zur Weiterbehandlung ausgewählten Nachrichtenzelle und eine Folgenummer, die einen gegenüber dieser Folgenummer SL um den festen Betrag n verringerten Wert aufweist, bilden die Grenzen eines als schraffiertes Rechteck dargestellten Fensters. Das Fenster läuft mit der Folgenummer SL der augenblicklich als letzte zur Weiterbehandlung ausgewählten Nachrichtenzelle mit. Nachrichtenzellen, deren Folgenummer s der Bedingung

$$(SL - n) < s \leq SL$$

genügen und die damit in das Fenster fallen, werden von der Annahme zur Weiterbehandlung ausgeschlossen.

Die Anzahl der von dem Fenster umfaßten Folgenummern mag der Hälfte der Anzahl der von einem Nachrichtenzellen-Folgezyklus umfaßten Folgenummern SNmax gleichen. Die Wahl der Größe des Fensters beeinflußt auch den Bereich, innerhalb dessen die zulässigen Folgenummern von zur Weiterbehandlung auswählbarer Nachrichtenzellen liegen. Der Bereich liegt zwischen der Folgenummer SL der augenblicklich als letzter zur Weiterbehandlung ausgewählten Nachrichtenzelle und dem für den künftig nächstfolgenden Nachrichtenzellen-Folgezyklus NZZm+1 gestrichelt dargestellten Fenster und genügt der Bedingung

$$SL + (SNmax - n).$$

Ausgehend von der Folgenummer SL der augenblicklich als letzter zur Weiterbehandlung ausgewählten Nachrichtenzelle sind Vorwärtssprünge betreffend die Folgenummer auf Nachrichtenzellen, deren Folgenummern in diesen Bereich fallen, begrenzt.

Eine äquivalente Beschreibung des Anmeldungsgegenstandes ist dadurch gegeben, daß ausschließlich die Nachrichtenzellen für eine Weiterbehandlung auswählbar sind, die in den Bereich SL + (SNmax - n) fallen.

Im übrigen kann durch fortlaufende Auswertung des Inhalts des Speicherplatzes, der den Übertragungsweg bezeichnet, über den die augenblicklich als letzte zur Weiterleitung ausgewählte Nachrichtenzelle der betreffenden Verbindung übertragen wurde, beispielsweise mit Hilfe eines gesonderten Algorithmus' eine hier nicht näher dargelegte Bestimmung der Fehlerrate eines Übertragungsweges erfolgen.

Das redundante Übertragungssystem ist im laufenden Betrieb von einem als aktiv bezeichneten Übertragungsweg, über den die augenblicklich als letzte zur Weiterleitung ausgewählte Nachrichtenzelle der betreffenden Verbindung übertragen wurde, auf einen anderen Übertragungsweg umschaltbar. Eine Umschaltung kann beispielsweise als Reaktion auf ein Erreichen einer vorgegebenen Fehlerrate oder der Feststellung eines Ausfalls des gerade wirksam geschalteten Übertragungsweges erfolgen. Die Umschaltung kann durch einen der Ausgangseinrichtung zugeordneten Boardcontroller erfolgen.

Der Anmeldungsgegenstand wurde zwar teilweise der einfacheren und klareren Darstellbarkeit halber nur für zwei Übertragungswege dargestellt, was jedoch die vermittelte Lehre für Übertragungssysteme mit einer größeren Anzahl von Übertragungswegen nicht beschränkt.

**Patentansprüche**

1. Verfahren zur Vermeidung von Reihefolgefehlern von Nachrichtenzellen und/oder zur Vermeidung von Wiederholungen von Nachrichtenzellen in einem Übertragungssystem, in dem redundante Nachrichtenzellen über redundante Übertragungswege übertragen werden, demzufolge

   - den Nachrichtenzellen einer virtuellen Verbindung zyklisch vergebene, fortlaufend aufsteigende Folgenummern zugeordnet sind
   - Nachrichtenzellen, die einer virtuellen Verbindung zugehören und die durch aufeinanderfolgende, voneinander unterscheidbare Folgenummern bezeichnet sind, einen Nachrichtenzellen-Folgezyklus bilden
   - eine Nachrichtenzelle zu einer Gruppe von zueinander redundanten Nachrichtenzellen, deren Anzahl der Anzahl von redundanten Übertragungswegen gleicht, vermehrfacht wird
   - über die redundanten Übertragungswege jeweils eine von zueinander redundanten Nachrichtenzellen übertragen wird
   - nach Maßgabe der von den Nachrichtenzellen mitgeführten Folgenummern nur eine redundante Nachrichtenzelle, die als nächste auf die augenblicklich als letzte weiterbehandelte Nachrichtenzelle folgt, zur Weiterbehandlung ausgewählt wird,

   **dadurch gekennzeichnet, daß**

   - die Folgenummer (SL) der augenblicklich als letzte weiterbehandelten Nachrichtenzelle und eine Folgenummer, die einen gegenüber dieser Folgenummer (SL) einen um einen festen Betrag (n) verringerten Wert aufweist, ein Fenster begrenzen
   - eine augenblicklich ankommende Nachrichtenzelle, deren Folgenummer (s) in das Fenster fällt, von der Auswahl zur Weiterbehandlung ausgeschlossen ist.

2. Verfahren nach Anspruch 1
   **dadurch gekennzeichnet, daß**
   der Wert des festen Betrags (n) im Wesentlichen der Hälfte der Anzahl der von einem Nachrichtenzellen-Folgezyklus umfaßten Nachrichtenzellen gleicht.

## Claims

1. Method for avoiding sequencing errors of message cells and/or for avoiding repetitions of message cells in a transmission system in which redundant message cells are transmitted over redundant transmission paths, in accordance with which

   - progressively ascending, cyclically assigned sequence numbers are assigned to message cells of a virtual connection,
   - message cells belonging to a virtual connection and identified by mutually distinguishable sequence numbers form a message cell sequence cycle,
   - a message cell for a group of mutually redundant message cells, the number of which is equal to the number of redundant transmission paths, is multiplied,
   - in each case one of mutually redundant message cells is transmitted over the redundant transmission paths,
   - in accordance with the sequence numbers also carried by the message cells, only one redundant message cell that is the next one following the message cell currently being further processed as the last message cell is selected for further processing,

   **characterized in that**

   - the sequence number (SL) of the message cell currently last further processed and a sequence number having a value decreased by a fixed amount (n) in relation to said sequence number (SL) form the boundaries of a window,
   - a currently arriving message cell whose sequence number (s) falls within the window is excluded from the selection for further processing.

2. Method according to Claim 1,
   **characterized in that**
   the value of the fixed amount (n) is essentially equal to half the number of message cells included in a message cell sequence cycle.

## Revendications

1. Procédé destiné à éviter des erreurs d'ordre de succession de cellules de messages et/ou à éviter des répétitions de cellules de messages dans un système de transmission, dans lequel des cellules de messages redondantes sont transmises au moyen de voies de transmission redondantes, selon lequel

   - des numéros de succession attribués de façon cyclique et croissant de façon continue sont attribués aux cellules de messages,
   - des cellules de messages, qui appartiennent à une liaison virtuelle et qui sont désignées par numéros de succession successifs et différenciables les uns des autres, forment un cycle de succession de cellules de messages,
   - une cellule de messages est multipliée en un groupe de cellules de messages redondantes les unes par rapport aux autres, dont le nombre équivaut au nombre de voies de transmission redondantes,
   - à chaque fois une des cellules de messages redondantes entre elles est transmise par les voies de transmission redondantes,
   - en fonction des numéros de succession emportés par les cellules de messages,
   - uniquement une cellule de messages redondante, qui suit en tant que prochaine cellule la cellule de messages retraitée momentanément en dernier, est sélectionnée pour le retraitement,

   **caractérisé en ce que**

   - le numéro de succession (SL) de la cellule de messages retraitée momentanément en dernier et un numéro de succession, qui présente une valeur réduite d'un montant (n) fixe par rapport à ce numéro de succession (SL), délimitent une fenêtre,
   - une cellule de messages arrivant momentanément, dont le numéro de succession (s) tombe dans la fenêtre, est exclue du choix pour le retraitement.

2. Procédé selon la revendication 1,
   **caractérisé en ce que** la valeur du montant (n) fixe équivaut sensiblement à la moitié du nombre des cellules de messages englobées par un cycle de succession de cellules de messages.

FIG 1

LICO

RPC

RPC Puffer

ASN 0

ASN 1

HTT

LICI

## FIG 2

| DATA | HEAD | ROUT |
|------|------|------|

## FIG 3

NZZ m          NZZ m + 1

n

SL

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0384936 A
- EP 0453606 A
- EP 0453607 A